**Europäisches Patentamt**

**European Patent Office**

**Office européen des brevets**

(11) Veröffentlichungsnummer: **0 175 971**
A2

## (12) EUROPÄISCHE PATENTANMELDUNG

(21) Anmeldenummer: 85111160.9

(22) Anmeldetag: 04.09.85

(51) Int. Cl.⁴: **G 03 B 3/10**

(30) Priorität: 24.09.84 IT 486684

(43) Veröffentlichungstag der Anmeldung:
02.04.86 Patentblatt 86/14

(84) Benannte Vertragsstaaten:
CH DE FR GB LI

(71) Anmelder: Durst AG Fabrik Fototechnischer Apparate
Gerbergasse 58
I-39100 Bozen(IT)

(72) Erfinder: Stemme, Otto, Dr.
Heideckstrasse 29
D-8000 München 19(DE)

(72) Erfinder: Schiffl, Heinz, Dipl.-Ing. (FH)
Caracciolastrasse 37
D-8000 München 45(DE)

(72) Erfinder: Büdel, Hubert, Dipl.-Ing. (FH)
Quittestrasse 35
D-8000 München 83(DE)

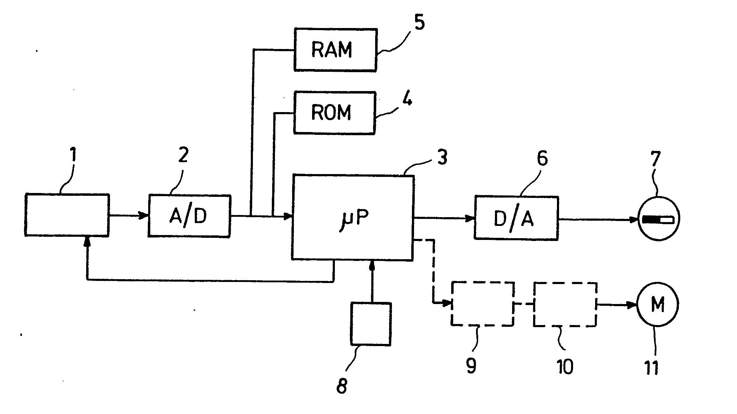

(54) Verfahren und Anordnung zur Scharfeinstellung der Abbildung eines Gegenstandes auf eine Bildebene.

(57) Zur Einstellung der Schärfe einer über ein Objektiv in einer Bildebene erzeugten Abbildung eines Gegenstandes unter Verwendung eines in der Bildebene angeordneten CCD-Bildsensors wird erfindungsgemäß für jeden Bildpunkt des Bildsensors der Mittelwert ($\overline{x}_j$) aus den Lichtmeßwerten ($x_i$) einer vorbestimmten Anzahl den jeweiligen Bildpunkt umgebender Bildpunkte gebildet und die Streuung ($Y$, $Y_s$) der Lichtmeßwerte ($x_i$) der einzelnen Bildpunkte in bezug auf den durch die Mittelwerte ($\overline{x}_j$) gegebenen Signalverlauf über die Gesamtzahl der Bildpunkte ermittelt. Die Scharfeinstellung wird nach Maßgabe der Streuung im Sinne einer Maximierung des ermittelten Wertes nachgeführt.

- 1 -

## Verfahren und Anordnung zur Scharfeinstellung der Abbildung eines Gegenstandes auf eine Bildebene

Die Erfindung betrifft ein Verfahren und eine Anordnung zur Einstellung der Schärfe einer über ein Objektiv in einer Bildebene erzeugten Abbildung eines Gegenstandes unter Verwendung eines in der Bildebene oder in einer der Bildebene äquivalenten Ebene angeordneten Bildsensors mit einer Vielzahl von Bildpunkten.

Eine Reihe bekannter Verfahren zur Scharfeinstellung beruhen auf einer Kontrastmessung der Objektabbildung und gehen von der Erkenntnis aus, dass maximaler Bildkontrast optimaler Bildschärfe entspricht. Eine derartige auf Wahrnehmung des Kontrastes basierende Anordnung zur Schärfeermittlung ist beispielsweise in der DE-OS 26 11 576 beschrieben. In ihr enthält ein Bildsensor eine Anzahl von Sensorelementen, deren helligkeitsabhängige Signale in aufeinanderfolgenden Meßzyklen abgefragt und zu einem Kontrastsignal verrechnet

- 2 -

werden. Dabei wird im wesentlichen die Summe
der Beträge der Differenzen zwischen dem Ausgangssignal jedes einzelnen Sensorelementes
und dem Mittelwert aus allen Sensorsignalen als
Schärfeinformation benutzt, wobei optimale
Schärfe dann erreicht ist, wenn der Summenwert
ein Maximum annimmt.

Einer derartigen Anordnung und Art der Signalauswertung sind hinsichtlich der Bildstrukturen,
auf die sie wirksam anspricht, gewisse Grenzen
gesetzt. So ist die beschriebene Anordnung beispielsweise nicht geeignet zur Erfassung des
Kontrastes und damit der Schärfe einer auf die
Kopierebene eines Projektionskopiergerätes
projizierten Abbildung einer Filmbildvorlage,
da bei der Vielfalt unterschiedlicher Bildvorlagen, den unterschiedlichen Formaten und Abbildungsmaßstäben und nicht zuletzt der praktischen
Schwierigkeit einer Ausrichtung des Bildsensors
auf ausgewählte Bildteile der Abbildung sowohl
nahezu strukturlose Bildteile als auch solche
mit ausgeprägter Bildstruktur für die Kontrast-
bzw. Schärfeermittlung in Betracht gezogen werden müssen.

Der Erfindung liegt die Aufgabe zugrunde, ein
Verfahren bzw. eine Anordnung der eingangs genannten Art zu schaffen, die weitgehend unab-

- 3 -

hängig von der Beschaffenheit des Bildmusters der Abbildung eine eindeutige Information über den Scharfstellzustand liefern, sodass ein Ausrichten der Sensorelemente auf spezielle Bildpartien der Objektabbildung weitgehend vermeidbar ist.

Die Aufgabe wird durch die in den Ansprüchen 1 und 7 gekennzeichnete Erfindung gelöst.

Der Einsatz von Bildsensoren mit einer großen Anzahl von Bildpunkten ermöglicht eine Bildabtastung hoher Auflösung und damit die Gewinnung detaillierter Bildinformationen auch bei feinen Bildstrukturen. Im Fall der Abbildung einer Filmbildvorlage in einem Projektionskopiergerät bedeutet dies, dass auch die durch das sogenannte Korn des Filmmaterials weitgehend statistisch verursachten Schwärzungsschwankungen erfaßt werden können.

Die erfindungsgemäße Auswertung der Streuung der Lichtmeßwerte der einzelnen Bildpunkte in bezug auf fortschreitend bereichsweise gebildete Mittelwerte in Verbindung mit dem Einsatz eines Bildsensors genügender Auflösung ermöglicht es, im Falle der Abbildung einer Filmvorlage auf das Korn des Filmmaterials scharfzustellen, sodass auch

- 4 -

Bildpartien ohne eigentliche Bildstruktur zur
Kontrastermittlung herangezogen werden können.
Bei vorhandener gröberer Bildstruktur im erfaßten
Bildbereich wird deren Einfluß auf das Ergebnis
der Kontrastermittlung durch die Verwendung bereichsweise gebildeter Mittelwerte weitgehend
ausgeschaltet, sodass das Scharfstellen auf
Korn weitgehend unabhängig von der Beschaffenheit
des Bildmusters ermöglicht ist.

Weitere Merkmale und vorteilhafte Ausgestaltungen
des erfindungsgemäßen Verfahrens und der erfindungsgemäßen Anordnung ergeben sich aus den Unteransprüchen in Verbindung mit der Beschreibung eines
Ausführungsbeispieles, das im folgenden anhand
einer Zeichnung dargestellt wird.

Die einzige Figur der Zeichnung zeigt das Blockschaltbild einer Scharfstellanordnung gemäß der
Erfindung.

Ein als Ladungsübertragungseinrichtung ausgebildeter Bildsensor 1 (CCD-Bildsensor) weist eine Vielzahl von Bildpunkten auf, deren elektrische Bildsignale mit Hilfe einer Steuerschaltung aufeinanderfolgend in der Reihenfolge der Anordnung der einzelnen Bildpunkte über einen gemeinsamen Ausgang
ausgelesen und in einem daran angeschlossenen A/D-Wandler 2 in digitale Werte umgesetzt werden. Damit stehen digitalisierte Helligkeitsinformationen der einzelnen Bildpunkte zur Verfügung, die die Helligkeit des vom Bildsensor erfaßten Bildteils wiedergeben. Die digitalisierten elektrischen Helligkeitssignale werden zur Weiterverarbeitung und Auswertung einem Digitalrechner zugeführt, der einen Mikroprozessor 3, einen das Operationsprogramm enthaltenden Festwertspeicher 4 und einen Datenspeicher 5 mit freiem Zugriff (Schreib-Lesespeicher) zur Speicherung von Operationsdaten umfaßt. Die am Rechnerausgang in digitaler Form anstehenden Ergebniswerte werden in einem an den Rechnerausgang angeschlossenen D/A-Wandler 6 in analoge Werte umgesetzt und einer analogen Anzeigeeinrichtung 7, die vorzugsweise mit einer Balken- oder Leuchtbandanzeige ausgestattet ist, zugeführt. Ein weiterer Rechnerausgang ist mit dem Steuereingang der Steuerschaltung des Bildsensors 1 verbunden und liefert ein Steuersignal zum Bilden einer Zeitfolge der Bildpunktsignale durch aufeinanderfolgendes Auslesen der Signale in Übereinstimmung mit der Anordnungsreihenfolge der Bildpunkte im Bildsensor, derart, dass der vom Bildsensor erfaßte Abbildungsteil selbsttätig und wiederholt abgetastet wird. Schließlich ist ein Rechnereingang mit einer Eingabeeinrichtung 8 verbunden, über die Befehle wie ein Startbefehl und ein Programmwahlbefehl an den Rechner erteilt werden.

- 6 -

In einer bevorzugten Ausführungsform der Anordnung ist der Bildsensor 1 ein an sich bekannter 256 Bildpunkte umfassender Zeilensensor, der über den A/D-Wandler an den digitalen Rechner gekoppelt ist, welcher die digitalisierten Ausgangssignale der Bildpunkte nach einem festgelegten Verrechnungsmodus zu einem Kontrastsignal verrechnet. Hierfür wird zunächst eine bereichsweise Mittelung der Lichtmeßwerte längs der Sensorzeile vorgenommen, d.h. es werden Mittelwerte $\bar{x}_j$ nach der Formel

$$\bar{x}_j = \frac{1}{k} \sum_{i=j-\frac{k}{2}+1}^{j+\frac{k}{2}} x_i \qquad j = \frac{k}{2} \cdots N - \frac{k}{2} \qquad (1)$$

gebildet, wobei $x_i$ der digitale Lichtmeßwert des Bildpunktes $\underline{i}$ der Sensorzeile ist ($i = 1 \ldots N$) und k die Anzahl der Bildpunkte des Intervalls über den sich die Mittelung erstreckt. (N ist die Anzahl der Bildpunkte des Sensors). In der Folge wird die Streuung der Lichtmeßwerte der einzelnen Bildpunkte über die Länge der Sensorzeile in bezug auf die bereichs- weise gebildeten Mittelwerte $\bar{x}_j$ ermittelt. Gemäß einem bevorzugten Verrechnungsmodus werden dafür zu- nächst die absoluten Differenzen

$$\left| x_i - \bar{x}_j \right| \qquad i = j = \frac{k}{2} \cdots N - \frac{k}{2} \qquad (2)$$

- 7 -

gebildet und dann deren Summe Y

$$Y = \sum_{i=j=\frac{k}{2}}^{N-\frac{k}{2}} \left| x_i - \bar{x}_j \right| \qquad (3)$$

errechnet.

Nach einem anderen Verrechnungsmodus kann die Streuung als Standardabweichung ausgedrückt und als Quadratwurzel aus dem Mittelwert der Quadrate der Differenzen (2) nach der Formel

$$Y_S = \sqrt{\frac{1}{N-k} \sum_{i=j=\frac{k}{2}}^{N-\frac{k}{2}} ( x_i - \bar{x}_j )^2} \qquad (4)$$

errechnet werden.

In der Praxis hat es sich als vorteilhaft erwiesen, die bereichsweise Mittelung jeweils über eine Anzahl von beispielsweise $k = 32$ Bildpunkten zu erstrecken. Es hat sich weiter als vorteilhaft erwiesen, die digitalen ursprünglichen Lichtmeßwerte der einzelnen Bildpunkte zur Dämpfung etwaiger Digitalisierungsfehler laufend über eine geringe Anzahl von beispielsweise vier benachbarten Bildpunkten zu mitteln und die so erhaltenen Werte als Ausgangswerte $\hat{=} x_i$ für die oben angegebene Verrechnung zu benutzen.

Die durch die Gleichung (3) bzw. (4) ausgedrückten Ergebniswerte Y bzw. $Y_s$ werden über den D/A-Wandler 6 der Anzeigeeinrichtung 7 als Maßgabe der Abbildungsschärfe zugeführt. Das Bild ist dann scharf, wenn die durch die Ergebniswerte Y bzw. $Y_s$ gegebene Streuung der Helligkeitswerte längs der abgetasteten Bildzeile maximal ist. Aus einem auf der Anzeigeeinrichtung angezeigten Wert ist jedoch zunächst nicht zu entnehmen, ob die Schärfe optimal ist. Erst beim Betätigen der auf die Scharfeinstellung wirkenden Verstellvorrichtung kann je nach Zu- oder Abnahme der Anzeige festgestellt werden, ob eine Verstellung in Richtung größerer oder geringerer Schärfe erfolgt. Für die Einstellung der Schärfe wird also die Änderung der Anzeige wahrgenommen, wenn das Scharfeinstellorgan betätigt wird, um zu unterscheiden, in welche Richtung und bis zu welcher Position die Einstellung zur Erzielung maximaler Schärfe nachgeführt werden muß. Dabei ergibt sich ein ausgeprägtes Maximum des schärfeabhängigen Signals in Übereinstimmung mit der exakten Schärfeposition, was eine hohe Einstellgenauigkeit gewährleistet.

Bei Abbildungen mit sehr feiner Bildstruktur oder Abbildungen von Filmvorlagen aus feinkörnigem Filmmaterial, wie es in neuerer Zeit in zunehmendem
Maße verwendet wird, flacht das Maximum des angezeigten Schärfesignals außerhalb des unmittelbaren
Schärfebereiches rasch ab, sodass außerhalb dieses
Bereiches unter Umständen eine nur mangelhafte Schärfeinformation entsteht. In einer Weiterbildung der
Erfindung ist der Rechner daher so programmiert, dass
eine Anpassung der Signalauswertung an unterschiedliche Bildstrukturen erfolgt. Hierfür wird die Reihe
der ermittelten Mittelwerte $\bar{x}_j$ in der Reihenfolge
der Bildpunkte auf der Sensorzeile auf das Vorhandensein einer vorbestimmten Anzahl aufeinanderfolgender
Werte mit stetem Zuwachs oder steter Abnahme untersucht. Ein Vorhandensein solcher Bereiche mit monotonem Anstieg oder Abfall in dem von den Mittelwerten
gegebenen Signalverlauf innerhalb der Bildzeile bedeutet das Vorhandensein von Bildkanten im abgebildeten Bildmuster, auf die vorzugsweise scharfgestellt
werden kann. Entsprechend wird dann vom Rechner die
Differenz zwischen dem größten und kleinsten Helligkeitswert in einem An- bzw. Abstiegsintervall gebildet und durch die Intervall-Länge d.h. die Anzahl
der Helligkeitswerte des Intervalls dividiert, was
der Ermittlung der Steilheit des Wertzuwachses im ausgewählten Intervall entspricht. Der Ergebniswert
wird dann als Schärfesignal angezeigt und die Abbildung ist scharfgestellt, wenn der angezeigte Wert im Zuge der Betätigung der Scharfstelleinrichtung einen Maximalwert erreicht.

Mit der erfindungsgemäßen Anordnung ergibt sich somit die Möglichkeit der Wahl unterschiedlicher Formen der Signalauswertung in Anpassung an das Bildmuster der Abbildung. Vorzugsweise erfolgt die Auswahl selbsttätig durch den Rechner in der Weise, dass bei festgestelltem Vorhandensein von Bildkanten im Bildmuster auf diese scharfgestellt, d.h. die Steilheit des Signalanstieges oder -abfalles im betreffenden Bereich ausgewertet wird. Es kann auch vorgesehen werden, dass der Rechner lediglich die Information vom Vorhandensein einer Bildkante im erfaßten Bildteil gibt, die Wahl der Form der Signalauswertung - Steilheit des Signalanstieges oder Streuung der Helligkeitsinformation über die Bildzeile - jedoch von einer Bedienungsperson getroffen und ein entsprechender Befehl über die Eingabeeinrichtung 8 an den Rechner eingegeben wird.

Mit dem erfindungsgemäßen Verfahren und der Anordnung zu dessen Ausführung ist somit eine präzise Einstellung der Schärfe von Abbildungen in einem weiten Bereich unterschiedlicher Bildmuster und Bildmusterkombinationen gesichert.

In einer bevorzugten Ausführung der Anordnung ist der

- 11 -

Bildsensor in einer frei beweglichen Meßsonde angeordnet, die über ein elektrisches Kabel mit einem
Meßgerät, das mindestens einen Teil der Signalverarbeitungsschaltung sowie die Anzeigeeinrichtung umfaßt, verbunden. Damit wird der Bildsensor in der
Bildebene, beispielsweise in der Kopierebene eines
Projektionskopiergerätes frei positionierbar, während
die Schärfeanzeige beim Scharfstellen des Bildes in
bequemer Stellung am Meßgerät beobachtet werden kann.
Dabei kann in der Meßsonde eine Einrichtung zum
Ausgleich des optischen Weges zwischen der Bildebene
und der Ebene des Bildsensors vorgesehen sein.

In einer Weiterbildung der erfindungsgemäßen Anordnung wird das Ergebnissignal des Rechners über einen
weiteren Rechnerausgang einem Maximalwertregler 9
zugeführt, der über eine Steuerschaltung 10 den Antriebsmotor 11 einer Verstellvorrichtung zum Ändern
der Schärfeposition steuert. Damit wird eine selbsttätige Nachführung der Scharfstellvorrichtung bis
zum Erreichen der optimalen Schärfe erreicht.

- 12 -

Patentansprüche:

1. Verfahren zur Einstellung der Schärfe einer über ein Objektiv in einer Bildebene erzeugten Abbildung eines Gegenstandes unter Verwendung eines in der Bildebene oder in einer der Bildebene optisch äquivalenten Ebene angeordneten ladungsgekoppelten Bildsensors mit einer Vielzahl von Bildpunkten, wobei die Bildpunktsignale sequentiell ausgelesen und zu einem schärfeabhängigen Signal verrechnet werden, dadurch gekennzeichnet, dass für jeden Bildpunkt des Bildsensors der Mittelwert ($\bar{x}_j$) aus den Lichtmeßwerten ($x_i$) einer vorbestimmten Anzahl den jeweiligen Bildpunkt umgebender Bildpunkte gebildet und die Streuung (Y, $Y_S$) der Lichtmeßwerte ($x_i$) der einzelnen Bildpunkte in bezug auf den durch die Mittelwerte ($\bar{x}_j$) gegebenen Signalverlauf über die Gesamtzahl der Bildpunkte bewertet wird und dass die Scharfeinstellung nach Maßgabe der Streuung im Sinne einer Maximierung des ermittelten Wertes nachgeführt wird.

2. Verfahren nach Anspruch 1, dadurch gekennzeichnet, dass als Streuungsmaß die Summe (Y) der absoluten Werte der Differenzen zwischen den Lichtmeßwerten ($x_i$)

- 13 -

eines Bildpunktes und dem Mittelwert ($\overline{x}_j$) der vorbestimmten Anzahl ihm benachbarter Bildpunkte benutzt wird.

3. Verfahren nach Anspruch 1 dadurch gekennzeichnet, dass als Streuungsmaß die Standardabweichung, ausgedrückt durch die Quadratwurzel aus dem Mittelwert der Quadrate der Differenzen zwischen den Lichtmeßwerten ($x_i$) eines Bildpunktes und dem Mittelwert ($\overline{x}_j$) der vorbestimmten Anzahl ihm benachbarter Bildpunkte benutzt wird.

4. Verfahren nach Anspruch 1 dadurch gekennzeichnet, dass der durch die ermittelten Mittelwerte ($\overline{x}_j$) gegebene Signalverlauf über die gesamte Anzahl der Bildpunkte nach Vorhandensein von Bereichen mit monotonem Anstieg oder Abfall innerhalb einer vorbestimmten Anzahl benachbarter Bildpunkte untersucht wird und je nach Vorhandensein bzw. Fehlen solcher Bereiche unterschiedliche Formen der Signalauswertung für die Gewinnung des schärfeabhängigen Ausgangssignals angewandt werden.

5. Verfahren nach Anspruch 4 dadurch gekennzeichnet,

- 14 -

dass im Falle des Vorhandenseins wenigstens eines Bereiches mit monotonem Anstieg oder Abfall innerhalb der vorbestimmten Anzahl benachbarter Bildpunkte vorzugsweise das Maß der Steilheit eines ausgewählten derartigen Bereiches als schärfeabhängiges Signal bewertet wird.

6. Verfahren nach einem der vorhergehenden Ansprüche dadurch gekennzeichnet, dass die digitalisierten ursprünglichen Helligkeitsinformationen der einzelnen Bildpunkte zur Dämpfung von Digitalisierungsfehlern fortlaufend über eine geringe Anzahl den jeweiligen Bildpunkt umgebender Bildpunkte gemittelt wird.

7. Anordnung zur Durchführung des Verfahrens nach einem oder mehreren der Ansprüche 1 bis 6, mit einem ladungsgekoppelten Bildsensor mit einer Vielzahl von Bildpunkten, einer Ansteuerschaltung zum sequentiellen Auslesen der Bildpunktsignale und einer Signalverarbeitungsschaltung zur Gewinnung, aus den Bildpunktsignalen, eines schärfeabhängigen Ausgangssignals,
dadurch gekennzeichnet,
dass die Signalverarbeitungsschaltung dazu ausgebildet ist, für jeden Bildpunkt den Mittelwert ($\bar{x}_j$) aus den Lichtmeßwerten ($x_i$) einer vorbestimmten Anzahl dem jeweiligen Bildpunkt benachbarter Bild-

- 15 -

punkte zu bilden und das Streuungsmaß der einzelnen Bildpunktsignale in bezug auf die ermittelten Mittelwerte zu bewerten.

8. Anordnung nach Anspruch 7
dadurch gekennzeichnet,
dass die Signalverarbeitungsschaltung dazu ausgebildet ist, das Streuungsmaß als Summe der absoluten Abweichungen der Lichtmeßwerte $(x_i)$ eines
jeden Bildpunktes vom Mittelwert $(\overline{x}_j)$ der Lichtmeßwerte der vorbestimmten Anzahl dem Bildpunkt
benachbarter Bildpunkte zu errechnen.

9. Anordnung nach Anspruch 7
dadurch gekennzeichnet,
dass die Signalverarbeitungsschaltung dazu ausgebildet ist, das Streuungsmaß als Quadratwurzel
aus der Summe der Quadrate der Abweichungen der
Lichtmeßwerte $(x_i)$ eines jeden Bildpunktes vom
Mittelwert $(\overline{x}_j)$ der Lichtmeßwerte der vorbestimmten
Anzahl dem Bildpunkt benachbarter Bildpunkte zu
errechnen.

10. Anordnung nach Anspruch 7
dadurch gekennzeichnet,
dass die Signalverarbeitungsschaltung dazu ausgebildet ist, den durch die ermittelten Mittelwerte
gegebenen Signalverlauf über die gesamte Anzahl

- 16 -

der Bildpunkte nach Vorhandensein von Bereichen mit monotonem Anstieg oder Abfall über eine vorbestimmte Anzahl benachbarter Bildpunkte zu untersuchen.

11. Anordnung nach Anspruch 10 dadurch gekennzeichnet, dass die Signalverarbeitungsschaltung dazu ausgebildet ist, das Ausmaß der Steilheit eines vorhandenen An- oder Abstieges im Signalverlauf zu bewerten.

12. Anordnung nach den Ansprüchen 10 und 11 dadurch gekennzeichnet, dass bei Vorhandensein von Bereichen mit monotonem An- oder Abstieg wahlweise deren Steilheit oder die Streuung $(Y, Y_S)$ der Lichtmeßwerte $(x_i)$ der einzelnen Bildpunkte in bezug auf die Mittelwerte $(\overline{x}_j)$ der vorbestimmten Anzahl ihnen benachbarter Bildpunkte zur Gewinnung eines schärfeabhängigen Signals auswertbar ist.

13. Anordnung nach Anspruch 7 dadurch gekennzeichnet, dass die Helligkeitsinformationen der Vielzahl von Bildpunkten des Bildsensors in digitalisierter Form einem Microprozessor, der Teil der Ansteuer- und Signalverarbeitungsschaltung ist, zugeführt werden.

- 17 -

14. Anordnung nach Anspruch 13
dadurch gekennzeichnet,
dass die Vielzahl von Bildpunkten des Bildsensors
vorzugsweise zeilenförmig angeordnet ist.

15. Anordnung nach einem oder mehreren der Ansprüche
7 bis 14
dadurch gekennzeichnet,
dass die Anzeige des schärfeabhängigen Ausgangssignals vorzugsweise eine über eine Anzeigevorrichtung mit Balken- oder Leuchtbandanzeige erfolgt.

16. Anordnung nach einem oder mehreren der Ansprüche
7 bis 14
dadurch gekennzeichnet,
dass das schärfeabhängige Ausgangssignal einem
Maximal-Wertregler zugeführt wird, der die Nachführung der Scharfstellvorrichtung für optimale
Schärfe selbsttätig steuert.